# EUROPÄISCHE PATENTSCHRIFT

(11) **EP 3 006 245 B1**
(45) Veröffentlichungstag und Bekanntmachung des Hinweises auf die Patenterteilung: **22.04.2020**
(21) Anmeldenummer: 15185916.2
(22) Anmeldetag: 18.09.2015
(51) Int. Cl.: B60W 10/105, B60L 1/00, B60W 10/26, B60W 30/188, F16H 3/72

(54) **GETRIEBESTEUERVERFAHREN**
METHOD OF CONTROLLING A TRANSMISSION
PROCEDE DE COMMANDE DE TRANSMISSION

(30) Priorität: 25.09.2014 DE 102014219438; 04.05.2015 DE 102015208160
(43) Veröffentlichungstag der Anmeldung: 13.04.2016
(73) Patentinhaber: Deere & Company, Moline, IL 61265 (US)
(72) Erfinder: Müller, David, 76297 Stutensee (DE); Fritz, Norbert, 68549 Ilvesheim (DE); Gugel, Rainer, 68723 Plankstadt (DE); Rekow, Andrew K, Cedar Falls, IA Iowa 50613 (US); Jeffries, Dennis L, Waterloo, IA Iowa 50701 (US)
(74) Vertreter: Dehnhardt, Florian Christopher

(56) Entgegenhaltungen:
- DE-A1-102011 087 946
- DE-A1-102012 204 477
- US-A1- 2008 103 002

## Beschreibung

Die Erfindung betrifft ein Verfahren zur Ansteuerung einer leistungsverzweigten Getriebevorrichtung in einem landwirtschaftlichen Arbeitsfahrzeug, wobei die Getriebevorrichtung ein Summierungsgetriebe, einen elektrischen Variator zum stufenlosen Variieren einer Übersetzung des Summierungsgetriebe und ein Getriebe mit verstellbarer Übersetzung umfasst, um einen Antriebsmotor mit einem Fahrantrieb des Arbeitsfahrzeugs zu verbinden und wobei der elektrische Variator eine erste und eine zweite elektrische Maschine und eine Steuerung zur Ansteuerung der elektrischen Maschinen umfasst.

Stufenlos leistungsverzweigte Getriebevorrichtungen sind in Baumaschinen und landwirtschaftlichen Arbeitsmaschinen, beispielsweise Traktoren, nach heutigem Stand der Technik insbesondere häufig im Premiumsegment anzutreffen und als hydraulischmechanisch leistungsverzweigte Getriebe ausgeführt. Der Leistungsfluss teilt sich hierbei in einen mechanischen Pfad, regelmäßig über einen oder mehrere Planetenradsätze geführt, und in einen hydrostatischen Pfad auf, in dem die Leistung über einen hydrostatischen Variator geführt wird, mit dem eine stufenlose Einstellung der Übersetzung vorgenommen werden kann. Am Markt erhältlich sind derartige Getriebevorrichtungen beispielsweise von Herstellern wie John Deere oder Fendt.

Aus der DE 197 49 74 C2 und der DE 10 2012 204 477 A1 sind stufenlos leistungsverzweigte Getriebevorrichtungen bekannt, bei denen der variable Pfad jeweils als elektrischer Variator ausgeführt ist. Bei derartigen elektro-mechanischen Getrieben wird sowohl mechanische als auch elektrische Leistung als Antriebsleistung genutzt.

Eine andere Entwicklungsrichtung bei Baumaschinen und landwirtschaftlichen Arbeitsfahrzeugen besteht in dem Aufbau eines zu dem bestehenden Bordnetz der Maschine zusätzlichen und mit einer höheren Nennspannung betriebenen zweiten Bordnetzes, mit dem elektrische Verbraucher, die eine derart höhere Nennspannung für ihren Betrieb benötigen, angetrieben werden können. Diese elektrischen Verbraucher können sowohl auf der Maschine an sich als auch auf einem Anbaugerät angeordnet sein. Herkömmlicherweise wird dieses zusätzliche zweite Bordnetz auf der Maschine durch ein eigenes dafür vorgesehenes Generatorsystem erzeugt. Hierbei entstehen allerdings zusätzliche Produktkosten und es reduziert sich der Gesamtwirkungsgrad infolge der zusätzlichen Bauteile.

Die DE 10 2011 087 946 A1 offenbart ein elektrisch leistungsverzweigtes Getriebe, mit einer elektrischen Maschine als Motor und einer elektrischen Maschine als Generator. Die als Generator ausgeführte Maschine versorgt auch einen Nebenabtrieb mit elektrischer Energie.

Ausgehend hiervon besteht die Aufgabe der vorliegenden Erfindung darin, ein Verfahren anzugeben, mit dem ein zweites Bordnetz auf dem Fahrzeug in integrierter Weise gespeist werden kann.

Die Aufgabe wird gelöst durch ein Verfahren nach dem Oberbegriff des Anspruchs 1, bei dem erfindungsgemäß bei Erkennen einer externen Leistungsanforderung eines elektrischen Verbrauchers ein Übersetzungsbereich des Getriebes mit verstellbarer Übersetzung derart eingestellt wird, dass die erste elektrische Maschine generatorisch und die zweite elektrische Maschine derart betrieben wird, dass eine bezogen auf die externe Leistungsanforderung bestehende Leistungsunterdeckung oder Leistungsüberdeckung kompensiert wird.

Unter externer Leistungsanforderung wird in diesem Kontext eine Leistungsanforderung verstanden, die außerhalb der Getriebevorrichtung entsteht. Somit kann die externe Leistungsanforderung beispielsweise von einem auf dem Arbeitsfahrzeug angeordneten elektrischen Verbraucher oder von einem auf einem Anbaugerät des Arbeitsfahrzeugs angeordneten elektrischen Verbraucher stammen.

Unter einer Leistungsunterdeckung bzw. Leistungsüberdeckung wird in diesem Kontext eine Differenz zwischen der von den beiden elektrischen Maschinen oder nur einer der elektrischen Maschinen erzeugten elektrischen Leistung und der Höhe der externen Leistungsanforderung dahingehend verstanden, dass eine Unterdeckung vorliegt, wenn die externe Leistungsanforderung die erzeugte elektrische Leistung übersteigt, und dass eine Überdeckung vorliegt, wenn die erzeugte elektrische Leistung die externe Leistungsanforderung übersteigt.

Es kann der Fall auftreten, dass die erste elektrische Maschine eine elektrische Leistung in einer bestimmten Höhe erzeugt, aber ein höherer externer Leistungsbedarf besteht. Um diese Differenz zumindest teilweise zu kompensieren wird die zweite elektrische Maschine ebenfalls generatorisch betrieben. Es kann andererseits der Fall auftreten, dass die erste elektrische Maschine eine elektrische Leistung in einer bestimmten Höhe erzeugt, aber ein niedrigerer externer Leistungsbedarf besteht. Um diese Differenz, die dann einen Leistungsüberschuss darstellt, zu kompensieren, wird die zweite elektrische Maschine motorisch betrieben, um diesen Leistungsüberschuss aufzunehmen.

Erfindungsgemäß ist nun erkannt worden, dass eine im Variatorzweig entgegen der ursprünglichen Richtung fließende Leistung, auch Blindleistung genannt, zur Deckung einer externen Leistungsanforderung herangezogen werden kann. Hierzu kann gezielt ein solcher Übersetzungsbereich des Getriebes mit verstellbarer Übersetzung eingestellt werden, dass das Summierungsgetriebe eine Leistung in den Variatorzweig hinein abgibt. Diese in den Variatorzweig abgegebene Leistung wird nicht als Blindleistung in das Summierungsgetriebe zurückgeführt, da sie erfindungsgemäß über die erste elektrische Maschine und über die Steuerung als elektrische Leistung zur Deckung der externen Leistungsanforderung abgeführt wird.

Bevorzugt wird das Summierungsgetriebe durch ein Planetenradgetriebe mit drei Antriebsschnittstellen gebildet, wobei je nach Richtung des Leistungsflusses die Antriebsschnittstellen als Eingang oder als Ausgang des Planetenradgetriebes wirken können. Es kann vorgesehen sein, dass der Antriebsmotor mit der ersten Antriebsschnittstelle des Planetenradgetriebes antriebsverbunden ist, um die Getriebevorrichtung mit Antriebsleistung zu versorgen, die wiederum über das mit der zweiten Antriebsschnittstelle des Planetenradgetriebes verbundene Getriebe mit verstellbarer Übersetzung an den Fahrantrieb weitergegeben werden kann. Weiterhin kann vorgesehen sein, dass die erste der beiden elektrischen Maschinen mit der dritten Antriebsschnittstelle des Planetenradgetriebes antriebsverbunden ist, um eine variable Übersetzung zwischen der ersten Antriebsschnittstelle und der zweiten Antriebsschnittstelle des Planetenradgetriebes darzustellen. Bevorzugt ist die zweite der beiden elektrischen Maschinen mit dem Antriebsmotor des Arbeitsfahrzeugs antriebsverbunden, wobei dies unter Zwischenschaltung einer Übersetzung in Form einer Stirnradstufe erfolgen kann.

Während des Antriebs der Arbeitsmaschine durch den Antriebsmotor kann die erste elektrische Maschine im Generatorbetrieb und im Motorbetrieb betrieben werden. Der Generatorbetrieb erzeugt elektrische Leistung, die per Definition mit einem negativen Vorzeichen versehen ist, und der Motorbetrieb benötigt bzw. verbraucht elektrische Leistung. Der Leistungsbedarf im Motorbetrieb beziehungsweise die Leistungsabgabe im Generatorbetrieb der ersten elektrischen Maschine ist abhängig von der erforderlichen Zugkraft des Arbeitsfahrzeugs und der nötigen Drehzahl der ersten elektrischen Maschine, um das einzustellende Übersetzungsverhältnis des Planetenradgetriebes zu erreichen.

Im Fall einer externen Leistungsanforderung kann ein Übersetzungsbereich des Getriebes mit verstellbarer Übersetzung gewählt werden, so dass die erste elektrische Maschine im Generatorbetrieb betrieben wird. Die von der ersten elektrischen Maschine im Generatorbetrieb abgegebene elektrische Leistung kann über die Steuerung einem externen elektrischen Verbraucher zur Verfügung gestellt, um einen bestehenden externen Leistungsbedarf zu decken. Insgesamt steigt durch das erfindungsgemäße Getriebesteuerverfahren der an der Ausgangswelle und der Steuerung der Getriebevorrichtung erzielte Gesamtwirkungsgrad, da die elektrische Leistung der ersten Maschine zur Erfüllung von Zugkrafterfordernissen ohnehin erzeugt werden muss. Der Vorteil besteht nun darin, dass diese elektrische Leistung nicht als Blindleistung über den Variatorzweig wieder in das Planetenradgetriebe eingespeist wird, sondern über die Steuerung einem externen elektrischen Verbraucher zur Verfügung gestellt wird.

Bevorzugt wird eine Übersetzung des Getriebes unter Berücksichtigung eines Fahrwiderstandes, der externen Leistungsanforderung und eines Fahrgeschwindigkeitswunsches eingestellt. Hierdurch wird sichergestellt, dass ein Übersetzungsbereich des Getriebes mit verstellbarer Übersetzung nur dann angesteuert wird bzw. nur dann ein anderer als der vorliegende Übersetzungsbereich angesteuert wird, wenn der momentan herrschende Fahrwiderstand und die Fahrgeschwindigkeit dies erlauben.

Bevorzugt ist ein mit der Steuerung verbundener Energiespeicher vorgesehen, um eine bezogen auf die externe Leistungsanforderung bestehende Leistungsüberdeckung oder Leistungsunterdeckung zu kompensieren. Hierdurch ist gewährleistet, dass im Falle einer Leistungsüberdeckung nochmals weniger Leistung als Blindleistung zirkuliert und im Falle einer Leistungsunterdeckung kann aus dem Energiespeicher Leistung zugesteuert werden.

Bevorzugt erfolgt über die Steuerung eine Drehmomentverstellung der elektrischen Maschinen unabhängig von der Drehzahl der elektrischen Maschinen, um Energie in jede der elektrischen Maschinen oder einen Energiespeicher zu speisen und jede der beiden elektrischen Maschinen generatorisch zu betreiben.

Die Erfindung wird im Folgenden anhand der Figuren beschrieben. Hierin zeigen
- Figur 1: ein landwirtschaftliches Arbeitsfahrzeug mit einem Anbaugerät;
- Figur 2: ein Getriebeschema zur Ausführung des erfindungsgemäßen Getriebesteuerverfahrens;
- Figuren 3a - 3c: verschiedene Leistungsflüsse in einem Getriebeschema;
- Figur 4: elektrische Leistungsverläufe über der Fahrzeuggeschwindigkeit ohne erfindungsgemäße Getriebesteuerung und
- Figur 5: elektrische Leistungsverläufe über der Fahrzeuggeschwindigkeit mit erfindungsgemäßer Getriebesteuerung.

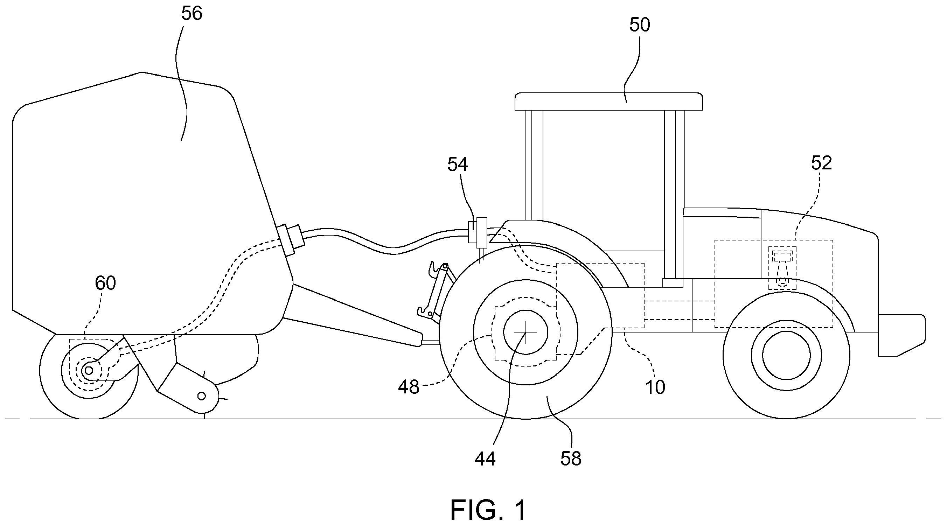

Die Figur 1 zeigt eine mögliche Anordnung eines landwirtschaftlichen Arbeitsfahrzeugs 50 mit einer nur schematisch angedeuteten leistungsverzweigten Getriebevorrichtung 10, die dazu hergerichtet ist, eine elektrische Leistung über eine Steuerung 26 und eine Leistungsschnittstelle 54 in Form eines AEF-Konnektors einem elektrischen Verbraucher 60 in Form einer elektrischen Antriebsachse auf einem Anbaugerät 56 bereitzustellen. Außerdem kann ein mit der Steuerung 26 verbundener Energiespeicher 27 vorgesehen sein, um elektrisch Leistung zu speichern und abzugeben. Bei dem Energiespeicher 27 kann es sich beispielsweise um eine Batterievorrichtung handeln. Bei dieser Anordnung handelt es sich nur um ein mögliches Beispiel. So muss der elektrische Verbraucher 60 weder zwingend eine elektrische Antriebsachse sein, noch muss er auf dem Anbaugerät 56 angeordnet sein, sondern kann gleichermaßen auf dem Arbeitsfahrzeug 50 angeordnet sein. Auch kann anstatt eines AEF-Konnektors eine andere genormte oder nicht genormte Schnittstelle zum Einsatz kommen.

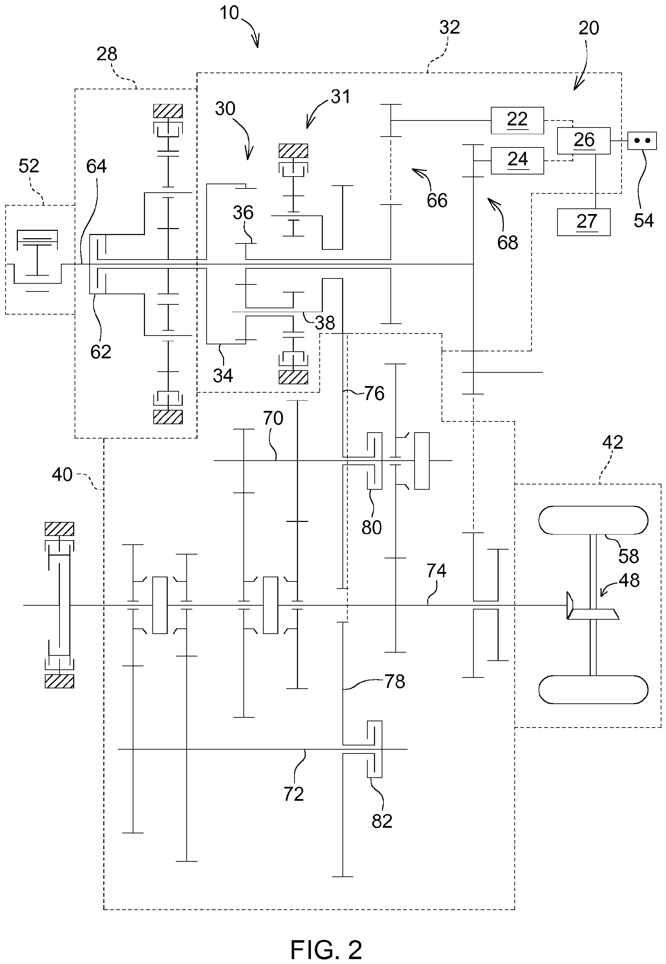

Die Figur 2 zeigt eine Antriebsanordnung des landwirtschaftlichen Arbeitsfahrzeugs 50, bei der ein Antriebsmotor 52 in Form einer Verbrennungskraftmaschine seine Antriebsleistung über ein bedarfsweise zuschaltbares reversierbares Doppelplanetenradgetriebe 28 und eine erfindungsgemäße Getriebevorrichtung 10 auf einen Fahrantrieb 42 überträgt. Der Fahrantrieb 42 kann regelmäßig ein Differentialgetriebe 48 und eine hintere Antriebsachse 44 mit Rädern 58 umfassen. Die Getriebevorrichtung 10 umfasst ein Summierungsgetriebe 30 in Form eines Planetenradgetriebes, einen elektrischen Variator 20 zum stufenlosen Einstellen eines Übersetzungsverhältnisses des Planetenradgetriebes 30 und ein Getriebe mit verstellbarer Übersetzung 40 in Form eines Gruppenschaltgetriebes mit vorliegend fünf Schaltgruppen A, B, C, D und E. Die bauliche Einheit bestehend aus dem Planetenradgetriebe 30 und dem elektrischen Variator 20 ist mit dem Bezugszeichen 32 gekennzeichnet und bildet die leistungsverzweigte elektro-mechanische Getriebeeinheit der Getriebevorrichtung 10. Dem Planetenradgetriebe 30 kann unmittelbar ein bedarfsweise zuschaltbares Kriechganggetriebe 46 nachgeordnet sein. Der elektrische Variator 20 umfasst eine erste elektrische Maschine 22, eine zweite elektrische Maschine 24 und eine mit den beiden elektrischen Maschinen 22, 24 und dem AEF-Konnektor 54 verbundene Steuerung 26. Es können weitere aber nicht dargestellte Abtriebe vorgesehen sein, beispielsweise ein Abtrieb für einen Zapfwellenantrieb oder ein Abtrieb für einen bedarfsweise zuschaltbaren Vorderradantrieb.

Der Antrieb des Planetenradgetriebes 30 erfolgt durch den Antriebsmotor 52 über das Hohlrad 34 des Planetenradgetriebes 30 und der Abtrieb in Richtung des Getriebes 40 erfolgt über den Planetenradträger 38 des Planetenradgetriebes 30. Hierzu kann über ein Schaltelement 62 das Hohlrad 34 mit der Antriebswelle 64 des Antriebsmotors 52 antriebsmäßig verbunden werden. Die erste elektrische Maschine 22 ist über eine erste Stirnradstufe 66 antriebsmäßig mit dem Sonnenrad 36 des Planetenradgetriebes 30 verbunden, um stufenlos das Übersetzungsverhältnis zwischen dem angetriebenen Hohlrad 34 und dem treibenden Planetenradträger 38 des Planetenradgetriebes 30 zu variieren. Die zweite elektrische Maschine 24 ist über eine zweite Stirnradstufe 68 antriebsmäßig mit der Antriebswelle 64 des Antriebsmotors 52 verbunden.

Das Getriebe 40 ist bei dem vorliegenden Ausführungsbeispiel als Doppelkupplungsgetriebe mit einer ersten Vorgelegewelle 70, einer zweiten Vorgelegewelle 72 und einer Abtriebswelle 74 ausgeführt. Mit dem Planetenradträger 38 des Planetenradgetriebes 30 stehen ein erstes auf der ersten Vorgelegewelle 70 gehaltenes Zahnrad 76 und ein zweites auf der zweiten Vorgelegewelle 72 gehaltenes Zahnrad 78 in einem Verzahnungseingriff. Das erste Zahnrad 76 kann über ein Schaltelement 80 mit der ersten Vorgelegewelle 70 und das zweite Zahnrad 78 kann über ein Schaltelement 82 mit der zweiten Vorgelegewelle 72 in eine Antriebsverbindung gebracht werden. Ausgehend von den Vorgelegewellen 70, 72 kann über nicht näher zu beschreibende Zahnradpaarungen und Schaltelemente ein Kraftfluss zu der Abtriebswelle 74 geschaltet werden, die ihrerseits den Fahrantrieb 42 antreibt.

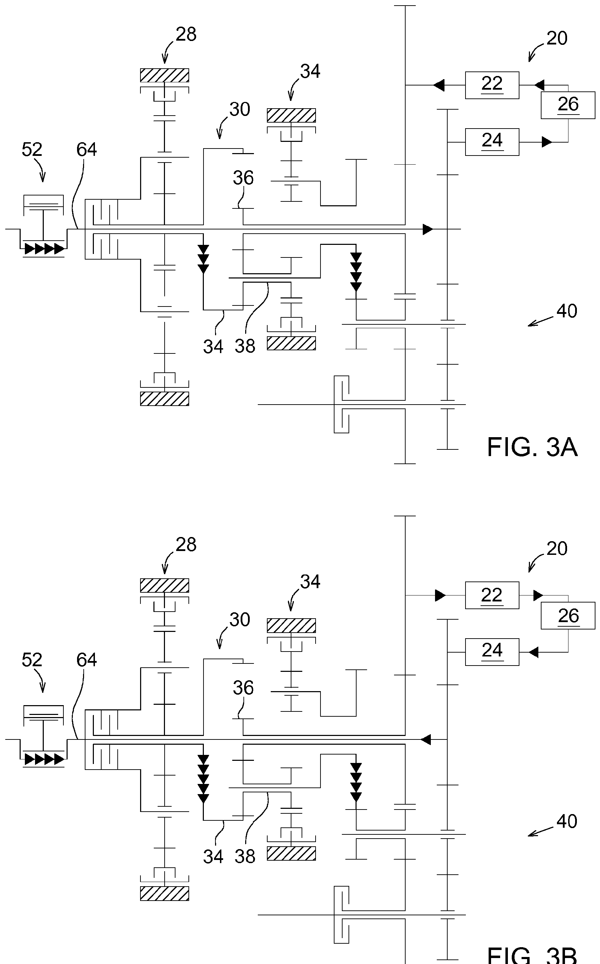

Über die Steuerung 26 erfolgt eine Drehmomentverstellung der beiden elektrischen Maschinen 22, 24 unabhängig von der Drehzahl der beiden elektrischen Maschinen 22, 24. Abhängig von der einzustellenden Übersetzung des Planetenradgetriebes 30 kann die erste elektrische Maschine 22 in der einen Drehrichtung im Motorbetrieb und in der entgegengesetzten Richtung im Generatorbetrieb betrieben werden. Wenn für das Planetenradgetriebe 30 eine Übersetzung einzustellen ist, für die ein Motorbetrieb der ersten elektrischen Maschine 22 erforderlich ist, so wird die zweite elektrische Maschine 24 im Generatorbetrieb betrieben und die hierdurch erzeugte elektrische Leistung der ersten elektrischen Maschine 22 für deren Motorbetrieb zur Verfügung gestellt. Dieser Fall der Ansteuerung kann anhand der Figur 3a in qualitativer Hinsicht erläutert werden. Gezeigt ist der Fluss von Leistungseinheiten, wobei eine Leistungseinheit mit einer Pfeilspitze symbolisiert wird. Es wird angenommen, dass der Antriebsmotor 52 vier Leistungseinheiten abgibt, von denen drei Leistungseinheiten über die Antriebswelle 64 und das Hohlrad 34 in das Planetenradgetriebe 30 fließen und eine Leistungseinheit über den Variator 20 und über das Sonnenrad 36 in das Planetenradgetriebe 30 fließt, so dass über den Planetenradträger 38 vier Leistungseinheiten in Richtung Schaltgetriebe 40 abfließen.

Wenn für das Planetenradgetriebe 30 eine Übersetzung einzustellen ist, für die ein Generatorbetrieb der ersten elektrischen Maschine 22 erforderlich ist, so wird hierdurch elektrische Leistung erzeugt, die einem anderen elektrischen Verbraucher zur Verfügung gestellt werden kann. Hierbei sind zwei Szenarien voneinander zu unterscheiden: Bei dem ersten Szenario besteht keine externe Leistungsanforderung, so dass die Steuerung 26 die zweite elektrische Maschine 24 im Motorbetrieb ansteuert und ihr die von der ersten elektrischen Maschine 22 erzeugte elektrische Leistung zur Verfügung stellt. Dieses erste Szenario kann anhand der Figur 3b in qualitativer Hinsicht erläutert werden. Wieder wird angenommen, dass der Antriebsmotor 52 vier Leistungseinheiten abgibt. Da die erste elektrische Maschine 22 jedoch im Generatorbetrieb betrieben wird, fließt über das Sonnenrad 36 eine Leistungseinheit zum Antrieb in die erste elektrische Maschine 22. Diese nicht nach Extern abgeführte Leistungseinheit fließt über die im Motorbetrieb betriebene zweite elektrische Maschine 24 zurück auf die Antriebswelle 64, so dass zusammen mit den vier von dem Antriebsmotor 52 abgegebenen Leistungseinheiten fünf Leistungseinheiten über das Hohlrad 34 in das Planetenradgetriebe 30 fließen. Da hiervon eine Leistungseinheit wiederum zum Antrieb der ersten elektrischen Maschine abfließt, fließen vier Leistungseinheiten über den Planetenradträger 38 in Richtung Schaltgetriebe 40 ab. Diese Leistungsüberhöhung um eine Leistungseinheit innerhalb des Planetenradgetriebes 30 ergibt sich infolge der über den Variator 20 rückwärts zirkulierenden Blindleistung.

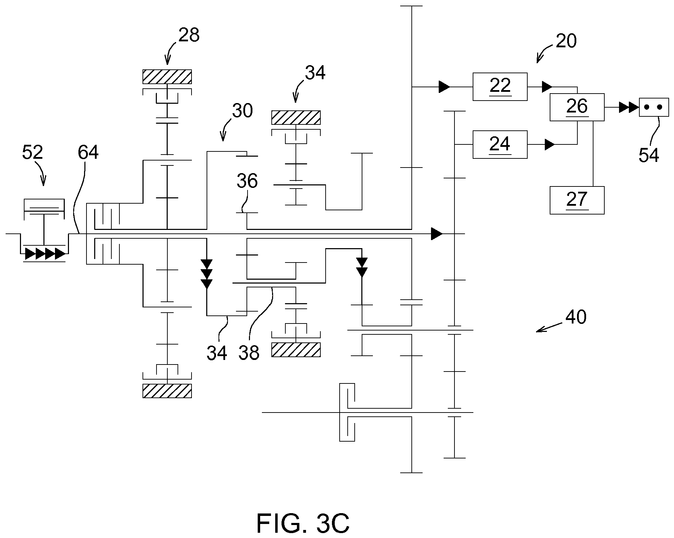

Bei dem zweiten Szenario besteht eine externe Leistungsanforderung, so dass die von der ersten elektrischen Maschine 22 erzeugte elektrische Leistung einem externen Verbraucher, beispielsweise der elektrischen Antriebsachse eines Anbaugeräts, zur Verfügung gestellt werden kann. Dieses zweite Szenario kann anhand der Figur 3c in qualitativer Hinsicht erläutert werden. In der Figur 3c wird die von der ersten elektrischen Maschine 22 erzeugte Leistungseinheit über die Steuerung 26 und den AEF-Konnektor 54 einem externen elektrischen Verbraucher zur Verfügung gestellt, um eine entsprechende externe Leitungsanforderung zu decken. Zusätzlich wird die zweite elektrische Maschine 24 von der Steuerung 26 im Generatorbetrieb angesteuert und die zwei durch die beiden elektrischen Maschinen 22, 24 erzeugten Leistungseinheiten werden über den AEF-Konnektor 54 einem externen elektrischen Verbraucher zur Verfügung gestellt. Entsprechend fließen nur zwei Leistungseinheiten in Richtung des Fahrantriebs 42. Lediglich in einem hier nicht dargestellten Sonderfall kann die Steuerung 26 die zweite elektrische Maschine in einem Leerlaufzustand ansteuern, so dass entsprechend von den vier Leistungseinheiten des Antriebsmotors 52 nur drei Leistungseinheiten in Richtung des Fahrantriebs 42 und eine Leistungseinheit über den AEF-Konnektor 54 fließen.

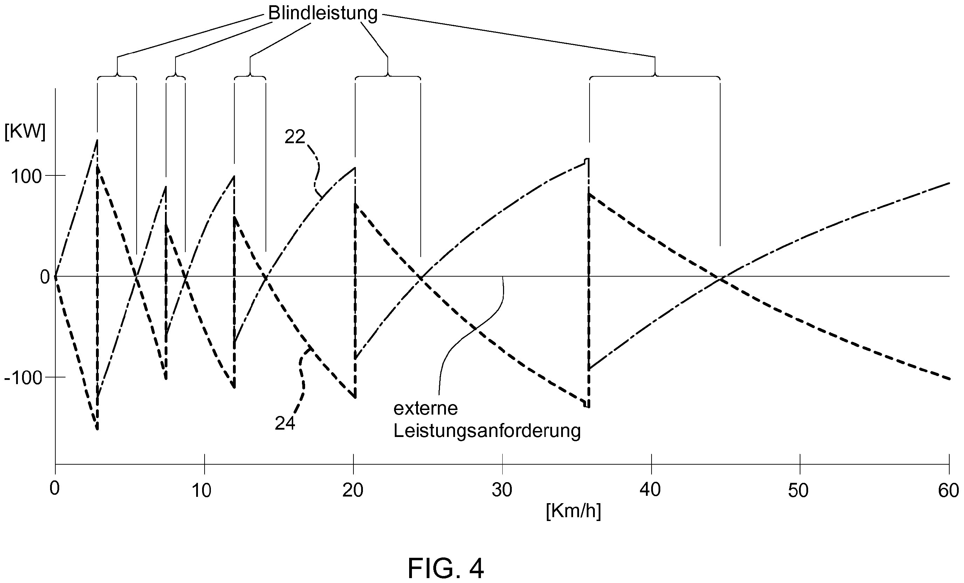

Die Figur 4 zeigt die elektrischen Leistungen der beiden elektrischen Maschinen 22, 24 des Variators 20, aufgetragen über der Fahrgeschwindigkeit des Arbeitsfahrzeugs 50. Die strichpunktierte Kurve entspricht der elektrischen Leistung der ersten elektrischen Maschine 22 und die gestrichelte Kurve der elektrischen Leistung der zweiten elektrischen Maschine 24. Die auf der Null-Achse liegende durchgezogene Linie entspricht der an einen externen Verbraucher 60 abgegebenen elektrischen Leistung, die vorliegend Null ist, da keine externe Leistungsanforderung vorliegt. Die Figur 4 zeigt das Ergebnis einer Berechnung der elektrischen Leistungen, die von einer Drehzahl des Antriebsmotors 52 von 1900 U/min und einer vollständigen Leistungsauslastung des Antriebsmotors 52 ausgeht. Zu erkennen sind gegenläufige Verläufe der Leistungen der beiden elektrischen Maschinen 22, 24. Ausgehend von einem Stillstand beschleunigt das Arbeitsfahrzeug 50 mit geschaltetem Kraftfluss über das Kriechganggetriebe 31 und im ersten Übersetzungsbereich A des Getriebes 40. Zunächst wird die erste elektrische Maschine 22 im Motorbetrieb betrieben, so dass die aufgenommene elektrische Leistung in Richtung eines positiven Wertes ansteigt, und die zweite elektrische Maschine 24 im Generatorbetrieb betrieben, so dass die abgegebene elektrische Leistung in Richtung eines negativen Wertes ansteigt. In diesem Schaltbereich zirkuliert keine Blindleistung in der leistungsverzweigten Getriebeeinheit 32. Wenn die beiden elektrischen Maschinen 22, 24 ihren betragsmäßig maximalen Leistungswert erreichen, wird der Kraftfluss über das Kriechganggetriebe 32 umgangen und das Arbeitsfahrzeug 50 beschleunigt weiter in dem ersten Übersetzungsbereich A des Getriebes 40. In diesem Schaltbereich werden zunächst die erste elektrische Maschine 22 im Generatorbetrieb und die zweite elektrische Maschine 24 im Motorbetrieb betrieben, so dass Blindleistung in der Getriebeeinheit 32 zirkuliert. Dieser Blindleistungsfluss hält an, bis ein Wechsel der Betriebsmodi der beiden elektrischen Maschinen 22, 24 stattfindet, so dass die erste elektrische Maschine 22 im Motorbetrieb und die zweite elektrische Maschine 24 im Generatorbetrieb betrieben werden und keine Blindleistung zirkuliert. Wenn die beiden elektrischen Maschinen 22, 24 wieder ihren betragsmäßig maximalen Leistungswert erreichen, wird in den zweiten Übersetzungsbereich B des Getriebes 40 geschaltet und das Arbeitsfahrzeug 50 beschleunigt weiter. Sowohl für diesen als auch die weiteren Übersetzungsbereich C, D, E des Schaltgetriebes 40 entsprechen die Verläufe der elektrischen Leistungen der beiden elektrischen Maschinen 22, 24 wie soeben für die Übersetzungsbereich A und B beschrieben, das heißt nach dem Schalten in den Übersetzungsbereich zirkuliert zunächst Blindleistung in der Getriebeeinheit 32, bis bei weiterer Beschleunigung die erste elektrische Maschine 22 im Motorbetrieb und die zweite elektrische Maschine 24 im Generatorbetrieb betrieben werden.

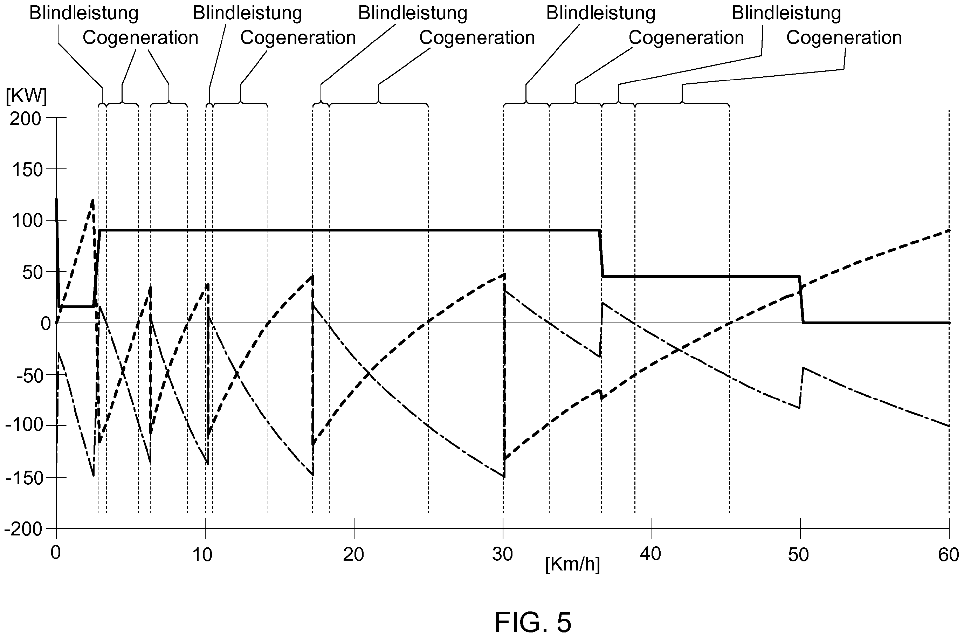

Die Figur 5 zeigt das Ergebnis einer Berechnung der elektrischen Leistungen unter Anwendung des erfindungsgemäßen Getriebeansteuerverfahrens. Auch hier wird ausgegangen von einer Drehzahl des Antriebsmotors 52 von 1900 U/min und einer vollständigen Leistungsauslastung des Antriebsmotors 52. Ferner wird von einer maximalen nach Extern abzugebenden Leistung von 90kW ausgegangen, um einen externen Leistungsbedarf zu decken. Bei der Größenordnung 90kW nach Extern abzugebender Leistung handelt es sich lediglich um einen für die vorliegende Berechnung angenommenen Wert, der in der Realität variieren kann. Verglichen mit der Figur 4 sind in der Figur 5 die Verläufe der elektrischen Leistungen der beiden elektrischen Maschinen 22, 24 grundsätzlich gleich. Das heißt nach einem Wechsel der Übersetzungsbereiche des Schaltgetriebes 40 Wechseln die beiden elektrischen Maschinen 22, 24 ihre Betriebsmodi, was allerdings in der Realität infolge nicht infinitesimal kurzer Schaltzeiten nicht derart zügig erfolgen kann, und während des Durchlaufens der Übersetzungsbereiche verlaufen die elektrischen Leistungen der beiden Maschinen 22, 24 mit entgegengesetzter Steigung zu einander und kreuzen sich innerhalb eines Übersetzungsbereichs. Im Unterschied zu Figur 4 sind bei den Verläufen der Figur 5 die Schaltpunkte zwischen den Übersetzungsbereichen des Schaltgetriebes 40 erfindungsgemäß derart gewählt worden, dass sie, bezogen auf die Fahrgeschwindigkeit, früher vollzogen werden und die Bereiche, in denen beide elektrische Maschinen 22, 24 im Generatorbetrieb betrieben werden, vergrößert beziehungsweise bezogen auf Fahrgeschwindigkeitsbereiche verbreitert werden. Verglichen mit der Figur 4, in denen in bestimmten Bereichen ein Leistungsanteil als Blindleistung in der Getriebeeinheit 32 zirkuliert, wird bei dem der Figur 5 zugrundeliegenden Getriebeansteuerverfahren gemäß der Erfindung dieser Leistungsanteil über die Steuerung 26 als externe Leistung einem externen elektrischen Verbraucher 60 zur Verfügung gestellt und zumindest überwiegend nicht in der Getriebeeinheit 32 zirkuliert. In der Figur 5 sind bezogen auf die Fahrgeschwindigkeit lediglich verhältnismäßig schmale Bereiche zu erkennen, in denen eine Blindleistung in der Getriebeeinheit 32 zirkuliert. In diesen Bereichen übersteigt die durch die erste elektrische Maschine 22 generatorisch erzeugte Leistung die nach Extern abgegebene Leistung von 90kW, so dass die zweite elektrische Maschine 24 motorisch betrieben wird, um diese überschüssige Leistung aufzunehmen, welche dann als Blindleistung in der Getriebeeinheit 32 zirkuliert. Auch sind in der Figur 5 Bereiche zu erkennen, in denen die erste elektrische Maschine 22 motorisch und die zweite elektrische Maschine 24 generatorisch betrieben werden, wobei allerdings die von der zweiten elektrischen Maschine 24 erzeugte elektrische Leistung die von der ersten elektrischen Maschine 22 aufgenommene Leistung übersteigt, so dass die den Leistungsbedarfs der ersten elektrischen Maschine 22 übersteigende Leistung als externe Leistung zur Verfügung gestellt werden kann.

Zusammenfassend ergibt sich bei einer erfindungsgemäßen Getriebesteuerung der beispielmäßig beschriebenen Getriebevorrichtung die Möglichkeit beide elektrische Maschinen im Generatorbetrieb zu betrieben, wodurch der Gesamtwirkungsgrad der Getriebevorrichtung steigt. Zudem ergibt sich durch das Getriebesteuerverfahren die Möglichkeit mit der bestehenden Getriebevorrichtung in einer relevanten Größenordnung elektrische Leistung zu generieren.

### Bezugszeichenliste

- 10: Getriebevorrichtung
- 20: Variator
- 22: elektrische Maschine
- 24: elektrische Maschine
- 26: Steuerung
- 27: Energiespeicher
- 28: Doppelplanetenradgetriebe
- 30: Summierungsgetriebe
- 32: elektro-mechanische Getriebeeinheit
- 34: Hohlrad
- 36: Sonnenrad
- 38: Planetenradträger
- 40: Getriebe
- 42: Fahrantrieb
- 44: Antriebsachse
- 46: Kriechganggetriebe
- 48: Differentialgetriebe
- 50: Arbeitsfahrzeug
- 52: Antriebsmotor
- 54: Leistungsschnittstelle
- 56: Anbaugerät
- 58: Räder
- 60: elektrischer Verbraucher
- 62: Schaltelement
- 64: Antriebswelle
- 66: Stirnradstufe
- 68: Stirn radstufe
- 70: Vorgelegewelle
- 72: Vorgelegewelle
- 74: Abtriebswelle
- 76: erstes Zahnrad
- 78: zweites Zahnrad

## Patentansprüche

1. Verfahren zur Ansteuerung einer leistungsverzweigten Getriebevorrichtung (10) in einem landwirtschaftlichen Arbeitsfahrzeug (50),
wobei die Getriebevorrichtung (10) ein Summierungsgetriebe (30), einen elektrischen Variator (20) zum stufenlosen Variieren einer Übersetzung des Summierungsgetriebe (30) und ein Getriebe mit verstellbarer Übersetzung (40) umfasst, um einen Antriebsmotor (52) mit einem Fahrantrieb (42) des Arbeitsfahrzeugs (50) zu verbinden und
wobei der elektrische Variator (20) eine erste und eine zweite elektrische Maschine (22, 24) und eine Steuerung (26) der elektrischen Maschinen (22, 24) umfasst,
bei dem bei Erkennen einer externen Leistungsanforderung eines elektrischen Verbrauchers (60) ein Übersetzungsbereich des Getriebes mit verstellbarer Übersetzung (40) derart eingestellt wird, dass die erste elektrische Maschine (22) generatorisch und die zweite elektrische Maschine (24) derart betrieben wird, dass eine bezogen auf die externe Leistungsanforderung bestehende Leistungsunterdeckung oder Leistungsüberdeckung kompensiert wird.

2. Verfahren nach Anspruch 1, **dadurch gekennzeichnet, dass** eine Übersetzung des Getriebes (40) unter Berücksichtigung eines Fahrwiderstandes, der externen Leistungsanforderung und eines Fahrgeschwindigkeitswunsches eingestellt wird.

3. Verfahren nach Anspruch 1 oder 2, **dadurch gekennzeichnet, dass** ein mit der Steuerung (26) verbundener Energiespeicher (27) vorgesehen ist, um eine bezogen auf die externe Leistungsanforderung bestehende Leistungsüberdeckung oder Leistungsunterdeckung zu kompensieren.

4. Verfahren nach einem der Ansprüche 1 bis 3, **dadurch gekennzeichnet, dass** über die Steuerung (26) eine Drehmomentverstellung der elektrischen Maschinen (22, 24) unabhängig von der Drehzahl der elektrischen Maschinen (22, 24) erfolgen kann, um Energie in jede der elektrischen Maschinen (22, 24) oder einen Energiespeicher (27) zu speisen und jede der beiden elektrische Maschinen (22, 24) generatorisch zu betreiben.

## Claims

1. Method for activating a power-split transmission device (10) in an agricultural working vehicle (50),
wherein the transmission device (10) comprises a summation transmission (30), an electric variator (20) for infinitely variably varying a transmission ratio of the summation transmission (30), and a transmission with an adjustable transmission ratio (40), in order to connect a drive motor (52) to a travel drive (42) of the working vehicle (50), and
wherein the electric variator (20) comprises a first and second electric machine (22, 24) and a controller (26) of the electric machines (22, 24),
in which, when an external power requirement of an electric consumer (60) is identified, a transmission ratio range of the transmission with an adjustable transmission ratio (40) is set in such a manner that the first electric machine (22) is operated in the generator mode and the second electric machine (24) is operated in such a manner that a power shortfall or power oversupply existing with respect to the external power requirement is compensated for.

2. Method according to Claim 1, **characterized in that** a transmission ratio of the transmission (40) is set taking into account a driving resistance, the external power requirement and a driving speed desire.

3. Method according to Claim 1 or 2, **characterized in that** an energy store (27) which is connected to the controller (26) is provided in order to compensate for a power oversupply or power shortfall existing with respect to the external power requirement.

4. Method according to one of Claims 1 to 3, **characterized in that** the controller (26) can be used to adjust the torque of the electric machines (22, 24) independently of the rotational speed of the electric machines (22, 24) in order to feed energy into each of the electric machines (22, 24) or into an energy store (27) and to operate each of the two electric machines (22, 24) in the generator mode.

## Revendications

1. Procédé de commande d'un dispositif (10) de boîtier renvoi d'angle à double sortie dans un véhicule de travail agricole (50),
le dispositif (10) de boîtier renvoi comprenant un mécanisme de sommation (30), un variateur électrique (20) pour la variation continue d'une transmission du mécanisme de sommation (30) et un mécanisme à transmission réglable (40), afin de relier un moteur d'entraînement (52) avec un entraînement de conduite (42) du véhicule de travail (50) et
le variateur électrique (20) comprenant une première et une deuxième machine électrique (22, 24) et une commande (26) des machines électriques (22, 24),
dans lequel, à la détection d'une demande de puissance externe d'un consommateur électrique (60), une plage de transmission du mécanisme à transmission réglable (40) est ajustée de telle sorte que la première machine électrique (22) fonctionne en tant que générateur et que la deuxième machine électrique (24) fonctionne de telle sorte qu'un déficit ou un excès de puissance existant par rapport à la demande de puissance externe soit compensé.

2. Procédé selon la revendication 1, **caractérisé en ce qu'**une transmission du mécanisme (40) est ajustée en tenant compte d'une résistance à l'avancement, de la demande de puissance externe et d'un souhait de vitesse de conduite.

3. Procédé selon la revendication 1 ou 2, **caractérisé en ce qu'**un accumulateur d'énergie (27) connecté à la commande (26) est prévu afin de compenser un déficit ou un excès de puissance existant par rapport à la demande de puissance externe.

4. Procédé selon l'une quelconque des revendications 1 à 3, **caractérisé en ce que** par le biais de la commande (26), un réglage de couple des machines électriques (22, 24) peut être effectué indépendamment de la vitesse de rotation des machines électriques (22, 24), afin de fournir de l'énergie dans chacune des machines électriques (22, 24) ou dans un accumulateur d'énergie (27) et de faire fonctionner chacune des deux machines électriques (22 ,24) en tant que générateur.
